# EUROPEAN PATENT SPECIFICATION

(11) **EP 2 689 484 B1**
(45) Date of publication and mention of the grant of the patent: **03.05.2017**
(21) Application number: 12796088.8
(22) Date of filing: 06.06.2012
(51) Int. Cl.: H01M 2/16, H01M 10/0525

(54) **BATTERY SEPARATOR AND METHOD FOR PREPARING THE SAME**
BATTERIESEPARATOR UND VERFAHREN ZU SEINER HERSTELLUNG
SÉPARATEUR DE BATTERIE ET SON PROCÉDÉ DE PRÉPARATION

(30) Priority: 10.06.2011 CN 201110155574
(43) Date of publication of application: 29.01.2014
(73) Proprietor: Shenzhen BYD Auto R&D Company Limited, Shenzhen, Guangdong 518118 (CN); BYD Company Limited, Shenzhen, Guangdong 518118 (CN)
(72) Inventor: LIN, Miaoyun, Shenzhen Guangdong 518118 (CN); YOU, Zhen, Shenzhen Guangdong 518118 (CN); YU, Weicheng, Shenzhen Guangdong 518118 (CN); LUO, Mingjun, Shenzhen Guangdong 518118 (CN); LIU, Huiquan, Shenzhen Guangdong 518118 (CN)
(74) Representative: Hoffmann Eitle
(86) International application number: PCT/CN2012/076542
(87) International publication number: WO 2012/167728

(56) References cited:
- WO-A1-2010/123685
- CN-A- 1 383 390
- CN-A- 101 127 392
- CN-A- 101 388 441
- CN-A- 101 635 341
- CN-A- 101 997 102
- JP-A- 2002 194 133
- KR-B1- 100 918 751
- US-B1- 7 662 518

## Description

### CROSS-REFERENCE TO RELATED APPLICATION

This application claims priority to and benefits of Chinese Patent Application Serial No. 201110155574.2, filed with the State Intellectual Property Office of P. R. China on June 10, 2011, the entire content of which is incorporated herein by reference.

### FIELD

The present disclosure relates to a battery separator, and more particularly to a lithium ion battery separator and a method for preparing the same.

### BACKGROUND

A Li-ion secondary battery is a battery with very high energy density, however, explosion risks caused by short circuit of the battery may occur. In the Li-ion secondary battery, a separator not only needs to conduct Li-ions, but also needs to separate a positive electrode from a negative electrode in order to prevent short circuit between the positive and negative electrodes and self-discharge inside the battery to a certain degree. Therefore, the performances such as thermal stability, safety, permeability, porosity and thickness of the separator may affect the performance of the battery largely.

Recently, the Li-ion secondary battery has been used in various fields such as the field of hybrid electric vehicles, and consequently requirements for thermal stability which the separator needs to meet becomes stricter and stricter. This is because poor thermal stability of the separator will result in explosion of the battery caused by overheating of the battery and melting and rupture of the separator. The thermal stability of the separator in the battery depends on the pore closing temperature and the separator rupture temperature. In order to ensure the thermal stability of the separator, the separator needs to have low pore closing temperature and high separator rupture temperature. Currently, in order to enhance the thermal stability of the separator, a conventional method of adding an inorganic material or a heat-resistant resin to a polyethylene is used. However, in this method, the compatibility between a filler and the polyethylene is poor, the separator is difficult to prepare, and the strength of the obtained separator is low. In addition, compared with a small battery, the requirements of a power battery for the permeability of the separator are higher. This is because poor permeability will result in large internal resistance of the battery, which may not supply enough energy to an electric vehicle. The permeability of the polyolefin separator prepared by a currently used wet method and a currently used dry method is poor, which may not meet the requirements of the power battery.

It has been reported that a polyvinylidene fluoride non-woven fabric is used as a battery separator. This non-woven fabric is also called nonwovens, is constituted by oriented or random fibers, is a new generation of environmentally friendly materials, and has properties of moisture resistance, air permeability, flexibility, light weight, no combustion supporting, easy decomposition, non-toxic property and nonirritant, rich colors, low price, recyclablility, etc. Because the polyvinylidene fluoride non-woven fabric has the appearance and certain performances of a cloth, the polyvinylidene fluoride non-woven fabric is referred to as a cloth. As the battery separator, the polyvinylidene fluoride non-woven fabric may enhance the air permeability and the high-temperature separator rupture temperature of the separator, however, the pore closing temperature of the polyvinylidene fluoride non-woven fabric is too high, which may generally reach up to about 150°C. However, in order to prevent the explosion of the battery caused by overheating of the battery, the requirements of the power battery for the pore closing temperature of the separator are generally high, and the pore closing temperature of the separator generally needs to be below about 135°C. Therefore, the battery separator which is merely constituted by the polyvinylidene fluoride non-woven fabric may not meet the requirements of the power battery. Meanwhile, because the polyvinylidene fluoride non-woven fabric has too large porosity and nonuniform pore size distribution, there are a few of large pores, which may cause certain potential safety risks of the battery. Moreover, if the battery separator is merely constituted by the polyvinylidene fluoride non-woven fabric, the puncture strength and the tensile strength of the battery separator are lower, which may still not meet the requirements of the power battery for the performance of the separator.

CN 101 388 441 relates to a gel-type polymer electrolyte film for a lithium ion secondary battery and a process for preparation, and a lithium ion secondary battery which contains the electrolyte film. The gel-type polymer electrolyte film for the lithium ion secondary battery can be obtained through the following method: preparing polyvinylidene fluoride nonwoven through the electrostatic spinning method, making the surface of the polyvinylidene fluoride nonwoven activate through radiating electron beams for the obtained the polyvinylidene fluoride nonwoven in air, contacting a methyl methacrylate monomer and the polyvinylidene fluoride nonwoven after the surface activation, thereby obtaining the polyvinylidene fluoride nonwoven whose surface is grafted with polymethyl methacryate.; Furthermore, the lithium ion battery electrolyte film can be obtained through making the polyvinylidene fluoride nonwoven whose surface is grafted with polymethyl methacryate absorbs a certain amount of electrolytic solution.

US 7,662,518 B1 relates to a microporous polyolefin battery separator membrane which is said to be extremely high in porosity, high in puncture strength, very low in shrinkage and with shutdown temperature of 130-140 °C and melt integrity greater than 165 °C. It consists of 20-30% by weight of a UHMW polyethylene having Mw of 1x10⁶ or higher, 60-70% by weight of a HDPE having average Mw of 200,000-500,000 and 5-15% by weight of TiO₂ with an average particle size of less than 0.2 microns.

### SUMMARY

Embodiments of the present disclosure seek to solve at least one of the problems existing in the prior art to at least some extent, particularly problems of unsatisfactory air permeability and unsatisfactory high-temperature separator rupture temperature of a conventional lithium ion battery separator as well as too high pore closing temperature, lower puncture strength and lower tensile strength of a polyvinylidene fluoride non-woven fabric separator, or to provide a consumer with a useful commercial choice.

According to embodiments of a first aspect of the present disclosure, there is provided a lithium ion battery separator. The lithium ion battery separator comprises: a substrate which is a polyvinylidene fluoride non-woven fabric; and a coating layer formed on each surface of the substrate, in which the material of the coating layer comprises an ultra-high molecular weight polyethylene and a linear low density polyethylene.

According to embodiments of a second aspect of the present disclosure, there is provided a method for preparing a lithium ion battery separator. The method comprises steps of:
(a) mixing an ultra-high molecular weight polyethylene, a linear low density polyethylene with a second solvent to obtain a second mixture, and heating and stirring the second mixture to obtain a mixed solution;
(b) coating the mixed solution onto both surfaces of a polyvinylidene fluoride non-woven fabric to obtain a coated film;
(c) stretching the coated film to obtain a stretched film; and
(d) heat setting the stretched film to obtain the lithium ion battery separator,
in which the second solvent is at least one selected from a group consisting of decalin, coal oils, benzene, toluene, chloroform, diethyl ether, trichloroethylene, paraffins and liquid paraffins. The good solvent for the polyolefin refers to a solvent having a polarity similar to that of the polyolefin and may better dissolve the polyolefin according to the similar dissolve mutually theory.

It has been unexpectedly found by the inventors that by coating a mixture of an ultra-high molecular weight polyethylene and a linear low density polyethylene onto both surfaces of a polyvinylidene fluoride non-woven fabric, the pore size distribution on the surface of the obtained separator may be more uniform, and the obtained separator may have higher air permeability, significantly reduced pore closing temperature, significantly enhanced puncture strength and significantly enhanced separator rupture temperature, thus enhancing the safety of a battery. The reasons are supposed as follows. The porosity of the separator coated with the mixture of the ultra-high molecular weight polyethylene and the linear low density polyethylene is 40% to 80%, and the separator with higher porosity may have higher air permeability. Meanwhile, because the melting point of the polyvinylidene fluoride is up to about 170°C so as to provide a higher separator rupture temperature to the separator, and the melting point of the coated polyolefin is about 135°C so as to provide a lower pore closing temperature to the separator, so that the separator may have higher separator rupture temperature and lower pore closing temperature simultaneously. In addition, because a conventional non-woven fabric separator is formed by a continuous one-step method comprising yarn spreading and hot pressing coiling, the orientation degree of the obtained non-woven fabric fibers is low, the adhesive strength between fibers is low, and the tensile strength and the puncture strength of the obtained non-woven fabric separator are low. However, by coating the ultra-high molecular weight polyethylene and the linear low density polyethylene onto both surfaces of the polyvinylidene fluoride non-woven fabric, after the ultra-high molecular weight polyethylene and the linear low density polyethylene are stretched and oriented, the mechanical strength is significantly enhanced, so that the puncture strength and the separator rupture temperature of the obtained separator may be significantly enhanced.

Additional aspects and advantages of embodiments of present disclosure will be given in part in the following descriptions, become apparent in part from the following descriptions, or be learned from the practice of the embodiments of the present disclosure.

### DETAILED DESCRIPTION

Reference will be made in detail to embodiments of the present disclosure. The embodiments described herein with reference to drawings are explanatory, illustrative, and used to generally understand the present disclosure. The embodiments shall not be construed to limit the present disclosure. In addition, terms such as "first" and "second" are used herein for purposes of description and are not intended to indicate or imply relative importance or significance.

According to an embodiment of the present disclosure, a lithium ion battery separator is provided. The lithium ion battery separator comprises: a substrate which is a polyvinylidene fluoride non-woven fabric; and a coating layer formed on each surface of the substrate, in which the material of the coating layer comprises an ultra-high molecular weight polyethylene and a linear low density polyethylene.

In the lithium ion battery separator according to an embodiment of the present disclosure, preferably, based on the total weight of the coating layer, the amount of the ultra-high molecular weight polyethylene is 12wt% to 97wt%, and the amount of the linear low density polyethylene is 3wt% to 88wt%. More preferably, based on the total weight of the coating layer, the amount of the ultra-high molecular weight polyethylene is 50wt% to 88wt%, and the amount of the linear low density polyethylene is 12wt% to 50wt%. Therefore, the ultra-high molecular weight polyethylene and the linear low density polyethylene may be dissolved more uniformly, and the adhesive strength between the coating layer and the substrate is higher.

In the lithium ion battery separator according to an embodiment of the present disclosure, preferably, the weight average molecular weight of the ultra-high molecular weight polyethylene is 1×10⁶ to 7×10⁶, the molecular weight distribution of the ultra-high molecular weight polyethylene is 3 to 30, the weight average molecular weight of the linear low density polyethylene is 1×10⁴ to 8×10⁴, and the molecular weight distribution of the linear low density polyethylene is 1.5 to 5. More preferably, the weight average molecular weight of the ultra-high molecular weight polyethylene is 2×10⁶ to 4×0⁶, the molecular weight distribution of the ultra-high molecular weight polyethylene is 5 to 15, the weight average molecular weight of the linear low density polyethylene is 2×10⁴ to 5×10⁴, and the molecular weight distribution of the linear low density polyethylene is 1.8 to 3. Therefore, the ultra-high molecular weight polyethylene and the linear low density polyethylene may be dissolved more uniformly, and the coating layer may have high viscosity and consequently may be adhered to the substrate more easily.

In the lithium ion battery separator according to an embodiment of the present disclosure, preferably, the thickness of the coating layer is 4µm to 12µm. More preferably, the thickness of the coating layer is 5µm to 8µm. Therefore, the coating layer may allow the separator to have better air permeability while improving the uniform pore size distribution of the polyvinylidene fluoride non-woven fabric and the strength of the separator to the largest extent.

In the lithium ion battery separator according to an embodiment of the present disclosure, preferably, the thickness of the polyvinylidene fluoride non-woven fabric is 12µm to 25µm. More preferably, the thickness of the polyvinylidene fluoride non-woven fabric is 15µm to 20µm. Therefore, the polyvinylidene fluoride non-woven fabric may have enough high strength and better air permeability.

In the lithium ion battery separator according to an embodiment of the present disclosure, the weight average molecular weight of the polyvinylidene fluoride non-woven fabric is preferably 2×10⁵ to 8×10⁵, more preferably 3×10⁵ to 6×10⁵, and the molecular weight distribution of the polyvinylidene fluoride non-woven fabric is preferably 2 to 5, more preferably 2.2 to 3.5. Therefore, the polyvinylidene fluoride may be dissolved uniformly and have suitable viscosity, beads in the obtained polyvinylidene fluoride non-woven fabric may be as few as possible, and the puncture strength and the tensile strength of the polyvinylidene fluoride non-woven fabric may be enhanced.

In the lithium ion battery separator according to an embodiment of the present disclosure, the mesh diameter of the polyvinylidene fluoride non-woven fabric is preferably 50nm to 900nm, more preferably 60nm to 400nm. Therefore, the air permeability of the lithium ion battery separator may be better improved while ensuring that no defects appear in the separator.

In the lithium ion battery separator according to an embodiment of the present disclosure, the porosity of the polyvinylidene fluoride non-woven fabric is preferably 50% to 80%, more preferably 55% to 75%. Therefore, enough high adhesive strength between fibers may be ensured while ensuring enough high air permeability of the separator, thus enhancing the strength of the lithium ion battery separator.

According to an embodiment of the present disclosure, a method for preparing a lithium ion battery separator is provided. The method comprises steps of:
(a) mixing an ultra-high molecular weight polyethylene, a linear low density polyethylene with a second solvent to obtain a second mixture, and heating and stirring the second mixture to obtain a mixed solution;
(b) coating the mixed solution onto both surfaces of a polyvinylidene fluoride non-woven fabric to obtain a coated film;
(c) stretching the coated film to obtain a stretched film; and
(d) heat setting the stretched film to obtain the lithium ion battery separator,
in which the second solvent is a good solvent for a polyolefin, which refers to a solvent having a polarity similar to that of the polyolefin. The second solvent is at least one selected from a group consisting of decalin, coal oils, benzene, toluene, chloroform, diethyl ether, trichloroethylene, paraffins and liquid paraffins.

In the method for preparing the lithium ion battery separator according to an embodiment of the present disclosure, preferably, in step (a), based on the total weight of the mixed solution, the amount of the ultra-high molecular weight polyethylene is 1wt% to 15wt%, the amount of the linear low density polyethylene is 0.5wt% to 8wt%, and the amount of the second solvent is 75wt% to 99wt%. More preferably, based on the total weight of the mixed solution, the amount of the ultra-high molecular weight polyethylene is 3wt% to 8wt%, the amount of the linear low density polyethylene is 1wt% to 3wt%, and the amount of the second solvent is 85wt% to 96wt%. Therefore, the ultra-high molecular weight polyethylene and the linear low density polyethylene may be dissolved more uniformly, and the adhesive strength between the coating layer and the substrate is higher.

In the method for preparing the lithium ion battery separator according to an embodiment of the present disclosure, preferably, in step (b), the operating speed of a coater is 1m/min to 10m/min, and the thickness of a coating layer formed on each surface of the substrate by coating the mixed solution of the ultra-high molecular weight polyethylene and the linear low density polyethylene is 4µm to 12µm. More preferably, the operating speed of the coater is 1.5m/min to 4m/min. Therefore, the production efficiency may be further enhanced while ensuring that the coating layer is adhered to the substrate in time.

In the method for preparing the lithium ion battery separator according to an embodiment of the present disclosure, preferably, in step (c), stretching the coated film may comprise first stretching and then extracting, or may comprise low-temperature stretching and high-temperature stretching, in which low-temperature stretching is used for phase separation.

Preferably, during the first stretching and then extracting, the stretching temperature of first stretching is 80°C to 130°C; the area stretching ratio of first stretching is 2 to 16; an extractant is at least one selected from the group consisting of n-hexane, heptane, octane or methylene chloride; and after extraction, the residual rate of the solvents in the extracted film may be not greater than 5%. More preferably, during the first stretching and then extracting, the stretching temperature of first stretching is 90°C to 120°C; the area stretching ratio of first stretching is 3 to 12; the extractant is at least one selected from the group consisting of n-hexane, heptane, octane or methylene chloride; and after extraction, the residual rate of the solvents in the extracted film may be not greater than 1%. Therefore, the performances such as air permeability, tensile strength, puncture strength and separator rupture temperature may be further enhanced.

More preferably, stretching the coated film may comprise low-temperature stretching and high-temperature stretching. First, low-temperature stretching is performed to subject the ultra-high molecular weight polyethylene, the linear low density polyethylene and the second solvent to phase separation, the stretching temperature of low-temperature stretching is 10°C to 60°C, and the area stretching ratio of low-temperature stretching is 1.2 to 4. After low-temperature stretching, high-temperature stretching is performed to evaporate the second solvent fully, the stretching temperature of high-temperature stretching is 80°C to 125°C, and the area stretching ratio of high-temperature stretching is 2 to 8. More preferably, the stretching temperature of low-temperature stretching is 20°C to 40°C, and the area stretching ratio of low-temperature stretching is 1.5 to 3, thus enhancing phase separation effects between the second solvent and the ultra-high molecular weight polyethylene and between the second solvent and the linear low density polyethylene. More preferably, the stretching temperature of high-temperature stretching is 90°C to 110°C, and the area stretching ratio of high-temperature stretching is 3 to 7, so that the second solvent may be evaporated more fully and the separator may have higher puncture strength and higher tensile strength.

In the method for preparing the lithium ion battery separator according to an embodiment of the present disclosure, preferably, step (d) comprises:
(d1) radiation crosslinking the stretched film to obtain a radiated film; and
(d2) heat setting the radiated film to obtain the lithium ion battery separator.

More preferably, in step (d1), a sensitizer is added during the radiation crosslinking, and the sensitizer is at least one selected from a group consisting of silicon dichloride, carbon tetrachloride, trimethylolpropane trimethacrylate, trimethylolpropane triacrylate and triallyl isocyanurate.

Under ray radiation, under the action of the sensitizer, several free radicals will be formed on molecular chains of the polyolefin and the polyvinylidene fluoride, and the free radicals may crosslink two or more linear molecules. Radiation crosslinking of the polyvinylidene fluoride non-woven fabric and the coating layer may result in high adhesive strength between the coating layer and the polyvinylidene fluoride non-woven fabric.

More preferably, in step (d1), a ray used during the radiation crosslinking is at least one selected from a group consisting of a λ ray, an x ray and an electron beam, and the dose of the ray is 100kGy to 400kGy. More preferably, the dose of the ray is 200kGy to 300kGy. Therefore, more active free radicals may participate in crosslinking, and degradation of the polyolefin and the polyvinylidene fluoride may be avoided.

In the method for preparing the lithium ion battery separator according to an embodiment of the present disclosure, preferably, in step (d2), the heat setting temperature is 100°C to 140°C. The heat setting comprises micro-stretching. The area stretching ratio of micro-stretching is 1 to 5. More preferably, the heat setting temperature may be 120°C to 130°C, and the area stretching ratio of micro-stretching may be 1.2 to 2.

In the method for preparing the lithium ion battery separator according to an embodiment of the present disclosure, the polyvinylidene fluoride non-woven fabric may be directly commercially available, or may be obtained by:
(s1) placing a polyvinylidene fluoride in a first solvent to obtain a first mixture, and heating and stirring the first mixture to obtain a polyvinylidene fluoride spinning solution; and
(s2) placing the polyvinylidene fluoride spinning solution in a high-voltage electrostatic spinning device for spinning to obtain the polyvinylidene fluoride non-woven fabric,
in which the first solvent is a good solvent for polyvinylidene fluoride. The good solvent for polyvinylidene fluoride is mainly used to be mixed with the polyvinylidene fluoride so as to form a spinning solution with certain electrical conductivity. The first solvent is at least one selected from a group consisting of N, N-dimethylformamide, N-methylpyrrolidone, acetone, dimethylacetamide, dimethyl sulfoxide and tetrahydrofuran.

In the method for preparing the battery separator according to an embodiment of the present disclosure, preferably, in step (s1), after placing the polyvinylidene fluoride in the first solvent to obtain the first mixture and heating and stirring the first mixture, the first mixture is subjected to ultrasonic deaeration treatment, so that the obtained fibers may have better continuity. During the ultrasonic deaeration treatment, various methods well known to those skilled in the art may be used, for example, a vacuum deaeration method, a static deaeration method, a high-temperature deaeration method or an ultrasonic deaeration method.

In the method for preparing the lithium ion battery separator according to an embodiment of the present disclosure, preferably, in step (s1), based on the total weight of the polyvinylidene fluoride spinning solution, the amount of the polyvinylidene fluoride is 3wt% to 30wt%, and the amount of the first solvent is 70wt% to 98wt%. More preferably, based on the total weight of the polyvinylidene fluoride spinning solution, the amount of the polyvinylidene fluoride is 8wt% to 20wt%, and the amount of the first solvent is 80wt% to 90wt%. Therefore, the spinning solution may flow more uniformly under the electric field force, the efflux of the charged spinning solution may be more stable, and the obtained fibers may be more continuous and may be distributed more uniformly.

In the method for preparing the lithium ion battery separator according to an embodiment of the present disclosure, preferably, in step (s1), the heating temperature is 30°C to 80°C, the stirring rate is 10r/min to 500r/min, and the heating time is 0.1h to 4h. More preferably, the heating temperature is 45°C to 70°C, the stirring rate is 30r/min to 200r/min, and the heating time is 0.5h to 2h. Therefore, oxidative degradation of the polyvinylidene fluoride and generation of air bubbles may be reduced, so that the polyvinylidene fluoride may be dispersed in the first solvent more uniformly.

In the method for preparing the lithium ion battery separator according to an embodiment of the present disclosure, particularly, step (s2) is as follows. The polyvinylidene fluoride spinning solution obtained in step (s1) is injected into a three-way tube in a spinning device, a spinning port is connected with a positive output terminal of a high-voltage power supply, a negative output terminal is connected with a metal receiving plate, the high-voltage power supply is turned on for preheating for 30min, the distance between the spinning port and the metal receiving plate is adjusted, and then spinning is started. The polyvinylidene fluoride spinning solution forms small spinning streams in the air after ejected from the spinning port, and moves to the metal receiving plate in a high-speed irregular spiral trajectory. Because of evaporation of the first solvent, the small spinning streams are solidified and fall on the metal receiving plate to form fiber aggregates similar to a non-woven fabric, and then the fiber aggregates are reinforced and compacted to form the polyvinylidene fluoride non-woven fabric.

In the method for preparing the lithium ion battery separator according to an embodiment of the present disclosure, preferably, in step (s2), the spinning voltage is 1KV to 80KV, more preferably 7KV to 30 KV, most preferably 8KV to 15KV. While increasing the voltage and the electric field intensity and ensuring that the fibers are thinner and more uniform, aggregation and adhesion of the fibers may be avoided, which are resulted from the fact that the voltage is too high, the acceleration rate of the efflux of the spinning solution is too high, there are too many 'wet' yarns accumulated on the metal receiving plate in a short time, and the first solvent does not have enough time to evaporate. Preferably, the distance between the spinning port and the metal receiving plate is 5cm to 30cm, more preferably 10cm to 18cm. Therefore, the first solvent in the 'wet' yarns accumulated on the metal receiving plate may be completely evaporated, and it may be ensured that the spinning solution may be completely ejected onto the metal receiving plate, so that the formed polyvinylidene fluoride non-woven fabric may be more regular and have better thickness uniformity.

Examples of the present disclosure will be described below to further illustrate the present disclosure.

### Example 1

The separator in this example is obtained by the following steps.
(s1) 4kg of a polyvinylidene fluoride with a weight average molecular weight of about 3.7×10⁵ and a molecular weight distribution of 2.4 was mixed with 32kg of N, N-dimethylformamide and 4kg of acetone to obtain a first mixture. The first mixture was added into a stirring tank. At a stirring rate of about 50r/min, the temperature was increased to about 60°C. The first mixture was heated and stirred at about 60°C for about 1h and ultrasonic deaerated, followed by standing for 2h to obtain a polyvinylidene fluoride spinning solution.
(s2) The polyvinylidene fluoride spinning solution obtained in step (s1) was injected into a three-way tube in a high-voltage electrostatic spinning device, a spinning port was connected with a positive output terminal of a high-voltage power supply, a negative output terminal was connected with a metal receiving plate, the high-voltage power supply was turned on at a spinning voltage of about 13KV for preheating for about 30min, the distance between the spinning port and the metal receiving plate was adjusted to be about 15cm, spinning was started to form fiber aggregates similar to a non-woven fabric, and then the fiber aggregates were reinforced and compacted to form a polyvinylidene fluoride non-woven fabric.

The diameter of the obtained polyvinylidene fluoride fibers on the metal receiving plate was about 50nm to about 200nm, the mesh diameter of the polyvinylidene fluoride non-woven fabric was about 80nm to about 300nm, the thickness of the polyvinylidene fluoride non-woven fabric was about 16µm, and the porosity of the polyvinylidene fluoride non-woven fabric was about 70%.
(a) 2kg of an ultra-high molecular weight polyethylene with a weight average molecular weight of about 3.9×10⁶ and a molecular weight distribution of about 5.3 and 0.4kg of a linear low density polyethylene with a weight average molecular weight of about 4×10⁴ and a molecular weight distribution of about 2 were mixed with 37.6kg of decalin to obtain a second mixture. The second mixture was added into a stirring tank. At a stirring rate of about 50r/min, the temperature was increased to about 135°C. The second mixture was heated and stirred at about 135°C for about 2h to obtain a mixed solution.
(b) The mixed solution obtained in step (a) was coated onto both surfaces of the polyvinylidene fluoride non-woven fabric obtained in step (s2) to obtain a coated film. Therefore, a coating layer was formed on each surface of the polyvinylidene fluoride non-woven fabric. The operating speed of a coater was about 2m/min, and the thickness of the coating layer was about 7µm.
(c) The coated film obtained in step (b) was stretched to obtain a stretched film. First, low-temperature stretching was performed at a stretching temperature of about 30°C with an area stretching ratio of about 3, and then high-temperature stretching was performed at a stretching temperature of about 105°C with an area stretching ratio of about 5.
(d1) The stretched film was radiation crosslinked to obtain a radiated film, so that the coating layer may better adhere to the polyvinylidene fluoride non-woven fabric.
(d2) The stretched film was heat set at a temperature of about 124°C to obtain the lithium ion battery separator. The area stretching ratio of micro-stretching was about 1.2.

The obtained separator is recorded as S 1.

### Example 2

This example is different from Example 1 in that: in step (s2), the spinning voltage was about 20KV, and the thickness of the obtained polyvinylidene fluoride non-woven fabric was about 26µm. The obtained separator is recorded as S2.

### Example 3

This example is different from Example 1 in that: in step (s1), 8kg of the polyvinylidene fluoride was mixed with 28kg of N, N-dimethylformamide and 4kg of acetone. The obtained separator is recorded as S3.

### Example 4

This example is different from Example 1 in that: in step (s2), the spinning voltage was about 5KV, the distance between the spinning port and the metal receiving plate was about 5cm, the diameter of the obtained polyvinylidene fluoride fibers was about 40nm to about 500nm, the mesh diameter of the polyvinylidene fluoride non-woven fabric was about 50nm to about 400nm, and the porosity of the polyvinylidene fluoride non-woven fabric was about 60%. The obtained separator is recorded as S4.

### Example 5

This example is different from Example 1 in that: in step (a), 6kg of the ultra-high molecular weight polyethylene and 1.2kg of the linear low density polyethylene were mixed with 32.8kg of decalin. The obtained separator is recorded as S5.

### Example 6

This example is different from Example 1 in that: in step (a), 0.8kg of the ultra-high molecular weight polyethylene and 1.6kg of the linear low density polyethylene were mixed with 37.6kg of decalin. The obtained separator is recorded as S6.

### Example 7

This example is different from Example 1 in that: in step (a), 2.35kg of the ultra-high molecular weight polyethylene and 0.05kg of the linear low density polyethylene were mixed with 37.6kg of decalin. The obtained separator is recorded as S7.

### Example 8

This example is different from Example 1 in that: in step (b), the operating speed of the coater was about 5m/min, and the thickness of the coating layer was about 12µm. The obtained separator is recorded as S8.

### Example 9

This example is different from Example 1 in that: in step (c), the stretching temperature of low-temperature stretching was about 20°C, and the stretching temperature of high-temperature stretching was about 90°C. The obtained separator is recorded as S9.

### Example 10

This example is different from Example 1 in that: step (d1) was not performed, that is, the stretched film was not radiation crosslinked. The obtained separator is recorded as S10.

### Example 11

This example is different from Example 1 in that: in step (a), 2kg of the ultra-high molecular weight polyethylene and 0.4kg of the linear low density polyethylene were mixed with 37.6kg of liquid paraffins; and in step (c), the coated film was merely subjected to one stretching at a stretching temperature of about 120°C with an area stretching ratio of about 6, the stretched film was extracted with n-hexane, the residual rate of the solvents in the extracted film was about 0.5%, the extracted film was dried at a drying temperature of about 80°C. The obtained separator is recorded as S 11.

### Comparative Example 1

This example is different from Example 1 in that: the polyvinylidene fluoride non-woven fabric was not coated. The obtained separator is recorded as D 1.

### Comparative Example 2

This example is different from Example 1 in that: a vinylidene fluoride-hexafluoropropylene copolymer non-woven fabric was prepared by high-voltage electrostatic spinning. The diameter of the prepared vinylidene fluoride-hexafluoropropylene copolymer fibers was about 300nm to about 500nm, the mesh diameter of the vinylidene fluoride-hexafluoropropylene copolymer non-woven fabric was about 500nm to about 800nm, the thickness of the vinylidene fluoride-hexafluoropropylene copolymer non-woven fabric was about 30µm, and the porosity of the vinylidene fluoride-hexafluoropropylene copolymer non-woven fabric was about 70%. The vinylidene fluoride-hexafluoropropylene copolymer non-woven fabric was not coated to obtain a separator D2.

### Performance Test

The following performances of the obtained separators S1-S11 and D1-D2 will be tested.

### (1) Air Permeability

Using a 4110 type Gurley air permeability tester, according to the GB/T5402-2003 test standard, under conditions of an average pressure difference of about 1.23kPa and a compressed area of the separator inside a cylinder of about 6.42cm², based on the time for which air with a volume of about 100ml passed through the separator, air permeability of the separators S1-S11 and D1-D2 was tested.

### (2) Puncture Strength

A puncture instrument was used to test the puncture strength of the separators S1-S11 and D1-D2. Particularly, each of the separators S1-S11 and D1-D2 was vertically pierced using a slick pin with a diameter of about 1mm at a speed of about 2m/min, and the results were recorded by a FCN-5B type data recorder.

### (3) Thermal Shrinkage Percent

According to the GB/T12027-2004/ISO 11501:1995 test standard, a 100mm×100mm region on each of the 120mm×120mm separators S1-S11 and D1-D2 was marked, each of the separators S1-S11 and D1-D2 was spread in an oven and coated with a layer of preheated kaolin, the temperature in the oven was about 90°C, and the heating time was 2h. Then, each sample was taken out and maintained at room temperature for about 30min. Before each sample was tested again, a 100mm×100mm region was marked. The thermal shrinkage percent was calculated according to a formula: ΔT=(T-T0)/T0×100%, where T is the length of a marked region after heating, T₀ is the initial length of the marked region, and the thermal shrinkage percent is the absolute value of ΔT.

### (4) Separator Rupture Temperature

Each of the separators S1-S11 and D1-D2 was placed in a simulation battery, each of the positive and negative electrodes of the simulation battery was made from a stainless steel sheet, the volume of an electrolyte in the simulation battery was about 1.0ml to about 1.2ml, and the contact area between each separator and the electrolyte was about 6.42 cm². The simulation battery was gradually heated from about 30°C to about 200°C. When the resistance of the simulation battery suddenly drops for the first time, if the resistance difference is greater than about 50 ohms, the temperature at which the resistance suddenly drops is the separator rupture temperature.

The above performance test results of the separators S1-S11 and D1-D2 are all converted into performance test results of the separators S1-S11 and D1-D2 each having a thickness of 25µm. The converted test results are shown in Table 1.

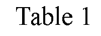

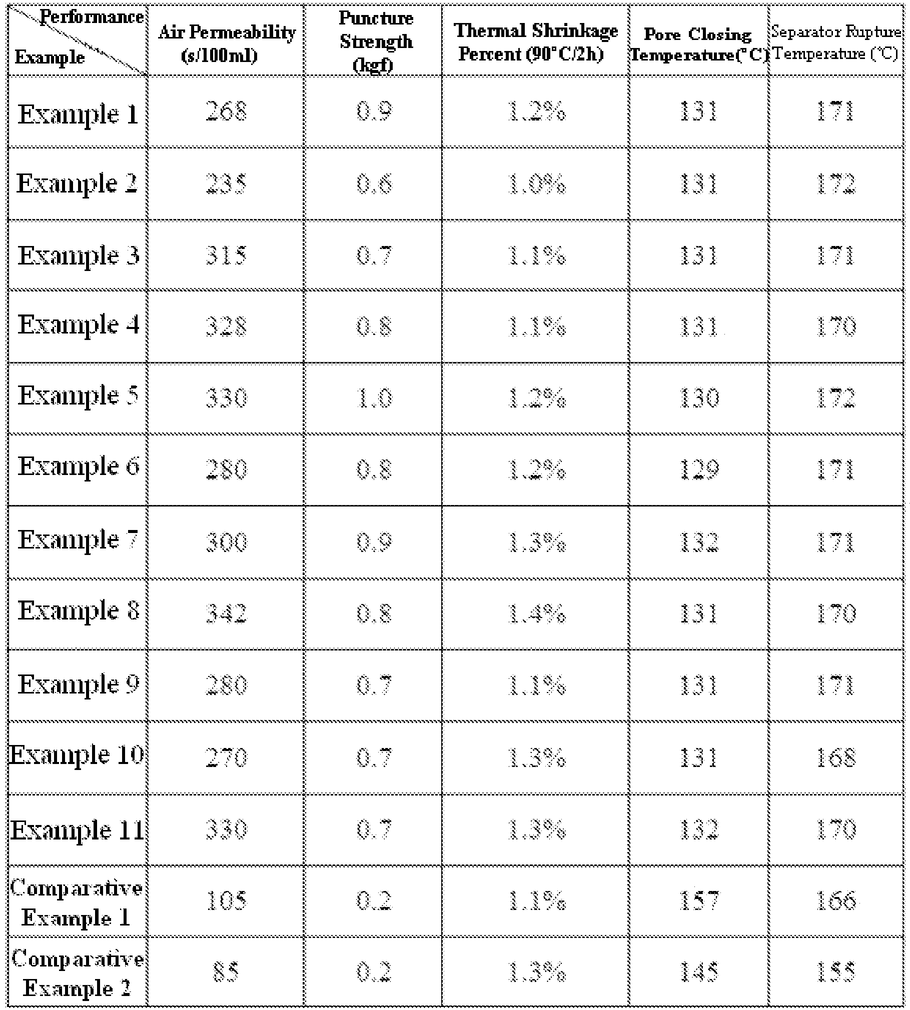

It may be seen from Table 1 that compared with Comparative Embodiment 1 and Comparative Embodiment 2, with the separator prepared by the method according to an embodiment of the present disclosure, the air permeability is higher, however, the air permeability of the separators in Comparative Embodiments 1-2 is lower, which indicated that the pore size of the separators in Comparative Embodiments 1-2 is too large or there are defects in the separators in Comparative Embodiments 1-2 so as to cause risks of direct contact of positive and negative electrodes. Moreover, compared with the separators in Comparative Embodiments 1-2, the separator according to an embodiment of the present disclosure has significantly reduced pore closing temperature, significantly enhanced puncture strength, significantly enhanced separator rupture temperature, and smaller thermal shrinkage percent, thus enhancing the safety of a battery.

Although explanatory embodiments have been shown and described, it would be appreciated by those skilled in the art that the above embodiments can not be construed to limit the present disclosure, and changes, alternatives, and modifications can be made in the embodiments without departing from spirit, principles and scope of the present disclosure.

## Claims

1. A lithium ion battery separator, comprising:
a substrate which is a polyvinylidene fluoride non-woven fabric; and
a coating layer formed on each surface of the substrate,
wherein the material of the coating layer comprises an ultra-high molecular weight polyethylene and a linear low density polyethylene.

2. The lithium ion battery separator of claim 1, wherein based on the total weight of the coating layer, the amount of the ultra-high molecular weight polyethylene is 12wt% to 97wt%, and the amount of the linear low density polyethylene is 3wt% to 88wt%.

3. The lithium ion battery separator of claim 1, wherein the weight average molecular weight of the ultra-high molecular weight polyethylene is 1×10⁶ to 7×10⁶, the molecular weight distribution of the ultra-high molecular weight polyethylene is 3 to 30, the weight average molecular weight of the linear low density polyethylene is 1×10⁴ to 8×10⁴, and the molecular weight distribution of the linear low density polyethylene is 1.5 to 5.

4. The lithium ion battery separator of claim 1, wherein the thickness of the coating layer is 4µm to 12µm.

5. The lithium ion battery separator of claim 1, wherein the thickness of the polyvinylidene fluoride non-woven fabric is 12µm to 25µm.

6. The lithium ion battery separator of claim 1, wherein the weight average molecular weight of the polyvinylidene fluoride non-woven fabric is 2×10⁵ to 8×10⁵, and the molecular weight distribution of the polyvinylidene fluoride non-woven fabric is 2 to 5.

7. The lithium ion battery separator of claim 1, wherein the mesh diameter of the polyvinylidene fluoride non-woven fabric is 50nm to 900nm, and the porosity of the polyvinylidene fluoride non-woven fabric is 50% to 80%.

8. A method for preparing a lithium ion battery separator according to claim 1, comprising steps of:
(a) mixing an ultra-high molecular weight polyethylene, a linear low density polyethylene with a second solvent to obtain a second mixture, and heating and stirring the second mixture to obtain a mixed solution;
(b) coating the mixed solution onto both surfaces of a polyvinylidene fluoride non-woven fabric to obtain a coated film;
(c) stretching the coated film to obtain a stretched film; and
(d) heat setting the stretched film to obtain the battery separator,
wherein the second solvent is at least one selected from a group consisting of decalin, coal oils, benzene, toluene, chloroform, diethyl ether, trichloroethylene, paraffins and liquid paraffins.

9. The method of claim 8, wherein step (d) comprises:
(d1) radiation crosslinking the stretched film to obtain a radiated film; and
(d2) heat setting the radiated film to obtain the battery separator.

10. The method of claim 9, wherein a sensitizer is added during the radiation crosslinking, and the sensitizer is at least one selected from a group consisting of silicon dichloride, carbon tetrachloride, trimethylolpropane trimethacrylate, trimethylolpropane triacrylate and triallyl isocyanurate.

11. The method of claim 9, wherein a ray used during the radiation crosslinking is at least one selected from a group consisting of a λ ray, an x ray and an electron beam, and the dose of the ray is 100kGy to 400kGy.

12. The method of claim 8, wherein based on the total weight of the mixed solution, the amount of the ultra-high molecular weight polyethylene is 1wt% to 15wt%, the amount of the linear low density polyethylene is 0.5wt% to 8wt%, and the amount of the second solvent is 75wt% to 99wt%.

13. The method of claim 8, wherein the stretching includes low temperature stretching and high temperature stretching, the stretching temperature of low temperature stretching is 20°C to 40°C, and the stretching temperature of high temperature stretching is 90°C to 110°C.

14. The method of claim 8, wherein the polyvinylidene fluoride non-woven fabric is obtained by:
(s1) placing a polyvinylidene fluoride in a first solvent to obtain a first mixture, and heating and stirring the first mixture to obtain a polyvinylidene fluoride spinning solution; and
(s2) placing the polyvinylidene fluoride spinning solution in a high-voltage electrostatic spinning device for spinning to obtain the polyvinylidene fluoride non-woven fabric,
wherein the first solvent is at least one selected from the group consisting of N, N-dimethylformamide, N-methylpyrrolidone, acetone, dimethylacetamide, dimethyl sulfoxide and tetrahydrofuran.

15. The method of claim 14, wherein based on the total weight of the polyvinylidene fluoride spinning solution, the amount of the polyvinylidene fluoride is 3wt% to 30wt%, and the amount of the first solvent is 70wt% to 98wt%.

## Patentansprüche

1. Trennvorrichtung für eine Lithium-Ionenbatterie, umfassend:
ein Substrat, das ein Faserstoff aus Polyvinylidenfluorid ist; und
eine Beschichtungsschicht, die auf jeder Oberfläche des Substrats gebildet ist,
wobei das Material der Beschichtungsschicht ein ultrahochmolekulares Polyethylen und ein lineares Polyethylen mit geringer Dichte umfasst.

2. Trennvorrichtung für eine Lithium-Ionenbatterie gemäß Anspruch 1, bei der, bezogen auf das Gesamtgewicht der Beschichtungsschicht, die Menge an ultra-hochmolekularem Polyethylen 12 Gew.% bis 97 Gew.% beträgt und die Menge an linearem Polyethylen mit geringer Dichte 3 Gew.% bis 88 Gew.% beträgt.

3. Trennvorrichtung für eine Lithium-Ionenbatterie gemäß Anspruch 1, bei der das gewichtsgemittelte Molekulargewicht des ultra-hochmolekularen Polyethylens 1x10⁶ bis 7x10⁶ beträgt und die Molekulargewichtsverteilung des ultra-hochmolekularen Polyethylens bei 3 bis 30 liegt, das gewichtsgemittelte Molekulargewicht des linearen Polyethylens mit geringer Dichte 1x10⁴ bis 8x10⁴ beträgt und die Molekulargewichtsverteilung des linearen Polyethylens mit geringer Dichte bei 1,5 bis 5 liegt.

4. Trennvorrichtung für eine Lithium-Ionenbatterie gemäß Anspruch 1, bei der die Dicke der Beschichtungsschicht 4µm bis 12µm beträgt.

5. Trennvorrichtung für eine Lithium-Ionenbatterie gemäß Anspruch 1, bei der die Dicke des Faserstoffs aus Polyvinylidenfluorid 12µm bis 25µm beträgt.

6. Trennvorrichtung für eine Lithium-Ionenbatterie gemäß Anspruch 1, bei der das gewichtsgemittelte Molekulargewicht des Faserstoffs aus Polyvinylidenfluorid 2x10⁵ bis 8x10⁵ beträgt und die Molekulargewichtsverteilung des Faserstoffs aus Polyvinylidenfluorid bei 2 bis 5 liegt.

7. Trennvorrichtung für eine Lithium-Ionenbatterie gemäß Anspruch 1, bei der der Maschendurchmesser des Faserstoffs aus Polyvinylidenfluorid 50nm bis 900nm beträgt und die Porosität des Faserstoffs aus Polyvinylidenfluorid bei 50% bis 80% liegt.

8. Verfahren zu Herstellung einer Trennvorrichtung für eine Lithium-Ionenbatterie gemäß Anspruch 1, das die folgenden Schritte umfasst:
(a) Mischen eines ultra-hochmolekularen Polyethylens, eines linearen Polyethylens mit geringer Dichte mit einem zweiten Lösungsmittel, um eine zweite Mischung zu erhalten, und Erwärmen und Rühren der zweiten Mischung, um eine vermischte Lösung zu erhalten;
(b) Auftragen der vermischten Lösung auf beiden Oberflächen des Faserstoffs aus Polyvinylidenfluorid, um eine beschichtete Schicht zu erhalten;
(c) Dehnen der beschichteten Schicht, um eine gedehnte Schicht zu erhalten; und
(d) Wärmehärten der gedehnten Schicht, um die Trennvorrichtung für eine Batterie zu erhalten,
wobei das zweite Lösungsmittel mindestens eines ist, das aus der Gruppe ausgewählt ist, die aus Decalin, Kohleölen, Benzol, Toluol, Chloroform, Diethylether, Trichlorethylen, Paraffinen und Flüssigparaffinen besteht.

9. Verfahren gemäß Anspruch 8, bei dem Schritt (d) folgendes umfasst:
(d1) Strahleninduziertes Vernetzen der gedehnten Schicht, um eine bestrahlte Schicht zu erhalten; und
(d2) Wärmehärten der bestrahlten Schicht, um die Trennvorrichtung für eine Batterie zu erhalten.

10. Verfahren gemäß Anspruch 9, bei dem ein Sensibilisator während dem strahleninduzierten Vernetzen hinzugefügt wird, wobei der Sensibilisator mindestens einer ist, der aus der Gruppe ausgewählt ist, die aus Siliciumdichlorid, Tetrachlorkohlenstoff, Trimethylolpropantrimethacrylat, Trimethylolpropantriacrylat und Triallylisocyanurat besteht.

11. Verfahren gemäß Anspruch 9, bei dem die während des strahleninduzierten Vernetzens verwendeten Strahlen von mindestens einer Sorte sind, die aus der Gruppe ausgewählt ist, die aus λ-Strahlen, Röntgenstrahlen und Elektronenstrahlen besteht, und die Strahlendosis bei 100kGy bis 400kGy liegt.

12. Verfahren gemäß Anspruch 8, bei dem, bezogen auf das Gesamtgewicht der vermischten Lösung, die Menge an ultra-hochmolekularem Polyethylen 1 Gew.% bis 15 Gew.% beträgt, die Menge an linearem Polyethylen mit geringer Dichte 0,5 Gew.% bis 8 Gew.% beträgt und die Menge an zweitem Lösungsmittel 75 Gew.% bis 99 Gew.% beträgt.

13. Verfahren gemäß Anspruch 8, bei dem das Dehnen das Niedrigtemperatur-Dehnen und Hochtemperatur-Dehnen einschließt, wobei die Dehnungstemperatur beim Niedrigtemperatur-Dehnen bei 20°C bis 40°C liegt und die Dehnungstemperatur beim Hochtemperatur-Dehnen bei 90°C bis 110°C liegt.

14. Verfahren gemäß Anspruch 8, bei dem der Faserstoff aus Polyvinylidenfluorid erhalten wird durch:
(s1) Platzieren eines Polyvinylidenfluorids in einem ersten Lösungsmittel, um eine erste Mischung zu erhalten, und Erwärmen und Rühren der ersten Mischung, um eine Polyvinylidenfluorid-Spinnlösung zu erhalten; und
(s2) Platzieren der Polyvinylidenfluorid-Spinnlösung in einer elektrostatischen Hochspannungs-Spinnvorrichtung zum Spinnen, um den Faserstoff aus Polyvinylidenfluorid zu erhalten,
wobei das erste Lösungsmittel mindestens eines ist, das aus der Gruppe ausgewählt ist, die aus N,N-Dimethylformamid, N-Methylpyrrolidon, Aceton, Dimethylacetamid, Dimethylsulfoxid und Tetrahydrofuran besteht.

15. Verfahren gemäß Anspruch 14, bei dem, bezogen auf das Gesamtgewicht der Polyvinylidenfluorid-Spinnlösung, die Menge an Polyvinylidenfluorid 3 Gew.% bis 30 Gew.% beträgt und die Menge an erstem Lösungsmittel 70 Gew.% bis 98 Gew.% beträgt.

## Revendications

1. Séparateur de batterie au lithium-ion, comprenant :
un substrat qui est un textile non tissé de polyfluorure de vinylidène ; et
une couche de revêtement formée sur chaque surface du substrat,
dans lequel le matériau de la couche de revêtement comprend un polyéthylène de poids moléculaire très élevé et un polyéthylène linéaire basse densité.

2. Séparateur de batterie au lithium-ion selon la revendication 1, dans lequel sur la base du poids total de la couche de revêtement, la quantité de polyéthylène de poids moléculaire très élevé est de 12 % en poids à 97 % en poids, et la quantité de polyéthylène linéaire basse densité est de 3 % en poids à 88 % en poids.

3. Séparateur de batterie au lithium-ion selon la revendication 1, dans lequel le poids moléculaire moyen en poids du polyéthylène de poids moléculaire très élevé est de 1x10⁶ à 7x10⁶, la répartition des poids moléculaires du polyéthylène de poids moléculaire très élevé est de 3 à 30, le poids moléculaire moyen en poids du polyéthylène linéaire basse densité est de 1x10⁴ à 8x10⁴, et la répartition des poids moléculaires du polyéthylène linéaire basse densité est de 1,5 à 5.

4. Séparateur de batterie au lithium-ion selon la revendication 1, dans lequel l'épaisseur de la couche de revêtement est de 4 µm à 12 µm.

5. Séparateur de batterie au lithium-ion selon la revendication 1, dans lequel l'épaisseur du textile non tissé de polyfluorure de vinylidène est de 12 µm à 25 µm.

6. Séparateur de batterie au lithium-ion selon la revendication 1, dans lequel le poids moléculaire moyen en poids du textile non tissé de polyfluorure de vinylidène est de 2x10⁵ à 8x10⁵, et la répartition des poids moléculaires du textile non tissé de polyfluorure de vinylidène est de 2 à 5.

7. Séparateur de batterie au lithium-ion selon la revendication 1, dans lequel le diamètre de maille du textile non tissé de polyfluorure de vinylidène est de 50 nm à 900 nm, et la porosité du textile non tissé de polyfluorure de vinylidène est de 50 % à 80%.

8. Procédé de préparation d'un séparateur de batterie au lithium-ion selon la revendication 1, comprenant les étapes suivantes :
(a) le mélange d'un polyéthylène de poids moléculaire très élevé, d'un polyéthylène linéaire basse densité avec un second solvant pour obtenir un second mélange, et le chauffage et l'agitation du second mélange pour obtenir une solution mélangée ;
(b) le revêtement de la solution mélangée sur les deux surfaces d'un textile non tissé de polyfluorure de vinylidène pour obtenir un film revêtu ;
(c) l'étirage du film revêtu pour obtenir un film étiré ; et
(d) la thermofixation du film étiré pour obtenir un séparateur de batterie,
dans lequel le second solvant est au moins un sélectionné parmi un groupe constitué de la décaline, des huiles de charbon, du benzène, du toluène, du chloroforme, de l'éther diéthylique, du trichloréthylène, des paraffines et des paraffines liquides.

9. Procédé selon la revendication 8, dans lequel l'étape (d) comprend :
(d1) la réticulation par rayonnement du film étiré pour obtenir un film rayonné ; et
(d2) la thermofixation du film rayonné pour obtenir le séparateur de batterie.

10. Procédé selon la revendication 9, dans lequel un sensibilisateur est ajouté pendant la réticulation par rayonnement et le sensibilisateur est au moins un sélectionné parmi un groupe constitué du dichlorure de silicium, du tétrachlorure de carbone, du triméthacrylate de triméthylolpropane, du triacrylate de triméthylolpropane et de l'isocyanurate de triallyle.

11. Procédé selon la revendication 9, dans lequel un rayon utilisé pendant la réticulation par rayonnement est au moins un sélectionné parmi un groupe constitué d'un rayon À, d'un rayon X et d'un faisceau d'électrons, et la dose de rayon est de 100 kGy à 400 kGy.

12. Procédé selon la revendication 8, dans lequel sur la base du poids total de la solution mélangée, la quantité de polyéthylène de poids moléculaire très élevé est de 1 % en poids à 15 % en poids, la quantité de polyéthylène linéaire basse densité est de 0,5 % en poids à 8 % en poids, et la quantité du second solvant est de 75 % en poids à 99 % en poids.

13. Procédé selon la revendication 8, dans lequel l'étirage comporte un étirage basse température et un étirage haute température, la température d'étirage de l'étirage basse température est de 20 °C à 40 °C, et la température d'étirage de l'étirage haute température est de 90 °C à 110 °C.

14. Procédé selon la revendication 8, dans lequel le textile non tissé de polyfluorure de vinylidène est obtenu par :
(s1) le placement d'un polyfluorure de vinylidène dans un premier solvant pour obtenir un premier mélange, et le chauffage et l'agitation du premier mélange pour obtenir une solution de filage de polyfluorure de vinylidène ; et
(s2) le placement de la solution de filage de polyfluorure de vinylidène dans un dispositif de filage électrostatique haute tension destiné au filage pour obtenir le textile non tissé de polyfluorure de vinylidène,
dans lequel le premier solvant est au moins un sélectionné parmi le groupe constitué du N,N-diméthylformamide, de la N-méthylpyrrolidone, de l'acétone, de la diméthylacétamide, du diméthylsulfoxyde et du tétrahydrofurane.

15. Procédé selon la revendication 14, dans lequel sur la base du poids total de la solution de filage de polyfluorure de vinylidène, la quantité du polyfluorure de vinylidène est de 3 % en poids à 30 % en poids, et la quantité du premier solvant et de 70 % en poids à 98 % en poids.
